# DEMANDE DE BREVET EUROPEEN

(11) **EP 1 857 856 A1**
(43) Date de publication de la demande: **21.11.2007**
(21) Numéro de dépôt: 07009612.8
(22) Date de dépôt: 14.05.2007
(51) Int. Cl.: G02C 1/06

(54) **Lunettes à montures amovibles**

(30) Priorité: 15.05.2006 FR 0604476
(71) Demandeur: Bouvret Société Nouvelle SARL, 39300 Champagnole (FR)
(72) Inventeur: Maradan, Gérard, 25000 Besançon (FR)
(74) Mandataire: Bentz, Jean-Paul

(57) **Abrégé**

Lunettes du type constituées par une monture interchangeable (1) dont la façade présente deux ouvertures (2, 3) encerclant deux verres optiques (4, 5) ou solaires et se prolongeant à ses extrémités extérieures par deux branches latérales (8, 9), chacun desdits verres étant rendu amovible par rapport à la monture, par l'intermédiaire d'un élément de cerclage métallique (10) disposé en relief et de manière définitive autour du verre (4, 5), et destiné à coopérer avec une gorge périphérique correspondante pratiquée dans l'ouverture (2, 3) de la monture (1), caractérisées en ce que chacun des éléments de cerclage des verres (4, 5) est constitué par un jonc (10), de section prédéterminée, s'intégrant d'une part, pour partie, dans une gorge de section correspondante du verre (4, 5), réalisée dans une zone médiane périphérique de celui-ci, et d'autre part, pour l'autre partie, dans une gorge périphérique interne de l'ouverture (2, 3) de la monture (1), dont les bords latéraux périphériques viennent en appui des bords latéraux périphériques du verre (4, 5), de part et d'autre du jonc (10), pour un recouvrement total de celui-ci.

## Description

La présente invention concerne des lunettes du type constituées par une monture interchangeable dont la façade présente deux ouvertures encerclant deux verres optiques ou solaires et se prolongeant à ses extrémités extérieures par deux branches latérales, chacun desdits verres étant rendu amovible par rapport à la monture, par l'intermédiaire d'un élément de cerclage métallique disposé en relief et de manière définitive autour du verre, et destiné à coopérer avec une gorge périphérique correspondante pratiquée dans l'ouverture de la monture.

Des lunettes de ce type ont déjà été décrites dans le brevet français N° 2 622 027 et présentent l'avantage de permettre le montage et le démontage à volonté des verres par rapport à la monture, celle-ci pouvant être choisie dans une gamme de montures prédéterminées, à disposition de l'utilisateur, en fonction de son goût du moment ou pour adapter le style de ses lunettes à sa tenue vestimentaire, sans pour autant changer les verres ou devoir disposer de plusieurs paires de lunettes, ce qui serait une solution onéreuse.

Néanmoins, les lunettes connues précitées souffrent de plusieurs inconvénients.

L'un d'eux tient au fait que l'élément de cerclage des verres est une bague dont la zone interne est de profil concave ou convexe s'emboîtant sur une zone correspondante mais inverse réalisée sur le chant du verre, en recouvrant totalement celui-ci de façon permanente. En ce qui concerne le profil de la gorge réalisée dans les ouvertures de la monture, celui-ci est concave selon plusieurs formes possibles et vient coiffer l'élément de cerclage du verre.

Mais l'épaisseur propre de l'élément de cerclage, et le fait que celui-ci recouvre la totalité du chant du verre font que, malgré son encastrement dans la gorge de la monture, l'élément de cerclage reste partiellement apparent, de part et d'autre des ouvertures de la monture, en créant un effet de dédoublement inesthétique et pas forcément en adéquation avec la couleur de la monture.

De plus, une telle conception favorise le déboîtement accidentel des verres, car l'élément de cerclage n'est pas réellement incrusté dans le chant du verre, mais le recouvre sans ancrage réel.

Enfin, le profil de l'élément de cerclage est complexe et donc onéreux.

La présente invention a pour but de remédier à ces inconvénients et concerne à cet effet des lunettes du type constituées par une monture interchangeable dont la façade présente deux ouvertures encerclant deux verres optiques ou solaires et se prolongeant à ses extrémités extérieures par deux branches latérales, chacun desdits verres étant rendu amovible par rapport à la monture, par l'intermédiaire d'un élément de cerclage métallique disposé en relief et de manière définitive autour du verre, et destiné à coopérer avec une gorge périphérique correspondante pratiquée dans l'ouverture de la monture, caractérisées en ce que chacun des éléments de cerclage des verres est constitué par un jonc, de section prédéterminée, s'intégrant d'une part, pour partie, dans une gorge de section correspondante du verre, réalisée dans une zone médiane périphérique de celui-ci, et d'autre part, pour l'autre partie, dans une gorge périphérique interne de l'ouverture de la monture, dont les bords latéraux périphériques viennent en appui des bords latéraux périphériques du verre, de part et d'autre du jonc, pour un recouvrement total de celui-ci.

On comprend bien que, par rapport à l'art antérieur cité, l'invention permet une simplicité de réalisation car il s'agit d'un jonc de section circulaire, par exemple, disponible dans le commerce.

En outre, cela offre une certaine fiabilité du système car un fil rond de cerclage, dans une gorge de profil correspondant, assure une cohésion parfaite et ne risque plus de provoquer un déboîtement.

Enfin et surtout, l'élément de cerclage est totalement invisible, contrairement à l'art antérieur.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente, en plan, une paire de verres optiques, avant cerclage par un jonc, selon l'invention.
La figure 1A représente une vue de côté d'un verre selon la figure 1.
La figure 2 représente, en plan, une paire de verres solaires, avant cerclage par un jonc, selon l'invention.
La figure 2A représente une vue de côté d'un verre selon la figure 2.
La figure 3 représente, en plan, une paire d'élément de cerclage destinée à deux verres, constituée par un jonc selon l'invention, avant montage sur les verres, et montrant également un dispositif de fermeture et de serrage de l'élément de cerclage sur le verre.
La figure 4 est une vue en coupe de l'élément de cerclage selon la ligne IV-IV de la figure 3, selon une forme de réalisation.
La figure 5 est une vue latérale en coupe de l'élément de cerclage selon la ligne V-V de la figure 3.
La figure 6 est une vue de détails à échelle agrandie du dispositif de fermeture de l'élément de cerclage selon la figure 3.
La figure 7 est une vue latérale en coupe et à échelle agrandie d'un verre optique ou solaire, prémuni d'un élément de cerclage et après insertion de ce sous-ensemble dans l'ouverture correspondante de la monture, selon une forme de réalisation.
La figure 8 est une vue en plan de deux verres optiques ou solaires prémunis de l'élément de cerclage avant montage sur la monture.
Les figures 9, 10 et 11 sont des exemples de divers modes de réalisation de montures interchangeables, aptes à recevoir de manière identique les verres selon la figure 8.
Les figures 12A, 12B, 12C représentent respectivement, en coupe transversale, une portion supérieure : d'un verre seul ; d'un verre prémuni d'un élément de cerclage ; d'un verre prémuni d'un élément de cerclage et enchâssé dans la monture, selon un premier exemple de réalisation, avec un élément de cerclage de section circulaire, associé à des gorges complémentaires formant un cercle correspondant.
Les figures 13A, 13B, 13C représentent respectivement, en coupe transversale, une portion supérieure: d'un verre seul ; d'un verre prémuni d'un élément de cerclage ; d'un verre prémuni d'un élément de cerclage et enchâssé dans la monture, selon un second exemple de réalisation, avec un élément de cerclage de section carrée, associé à des gorges complémentaires formant un carré correspondant.
Les figures 14A, 14B, 14C représentent respectivement, en coupe transversale, une portion supérieure : d'un verre seul ; d'un verre prémuni d'un élément de cerclage ; d'un verre prémuni d'un élément de cerclage et enchâssé dans la monture, selon un troisième exemple de réalisation, avec un élément de cerclage de section circulaire, associé à une gorge de section correspondante du verre et à une gorge de section triangulaire de la monture.

De manière connue, les lunettes sont constituées par une monture interchangeable 1A, 1B, 1C dont la façade présente deux ouvertures 2, 3 encerclant deux verres optiques 4, 5 ou solaires 6, 7 et se prolongeant à ses extrémités extérieures par deux branches latérales 8, 9, chacun desdits verres étant rendu amovible par rapport à la monture, par l'intermédiaire d'un élément de cerclage métallique 10 disposé en relief et de manière définitive autour du verre 4, 5 ou 6, 7, et destiné à coopérer avec une gorge périphérique 11 correspondante pratiquée dans l'ouverture 2, 3 de la monture 1.

Selon l'invention, chacun des éléments de cerclage des verres 4, 5 ou 6, 7 est constitué par un jonc 10A, 10B, de section prédéterminée, s'intégrant d'une part, pour partie, dans une gorge 11, 11A, 11B de section correspondante du verre 4, 5 ou 6, 7, réalisée dans une zone médiane périphérique de celui-ci, et d'autre part, pour l'autre partie, dans une gorge périphérique interne 12, 12A, 12B de l'ouverture 2, 3 de la monture 1, dont les bords latéraux périphériques « a », « b » viennent en appui des bords latéraux périphériques « c », « d » du verre 4, 5 ou 6, 7, de part et d'autre du jonc 10, 10A, 10B, pour un recouvrement total de celui-ci.

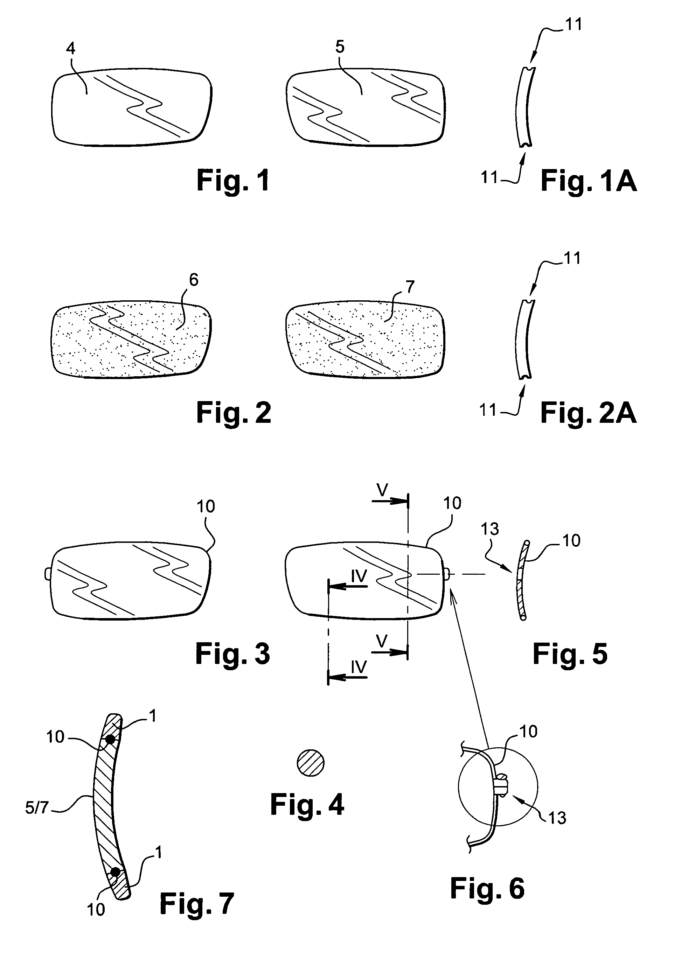

Selon l'exemple de réalisation des figures 1 à 12, le jonc 10 est de section circulaire et est intégré de manière définitive dans la gorge 11 du verre 4, 5 ou 6, 7, et de manière amovible dans la gorge 12 de l'ouverture 2, 3 de la monture 1, 1A, 1B, les deux gorges 11, 12 reformant entre elles une section circulaire correspondant à celle du jonc 10.

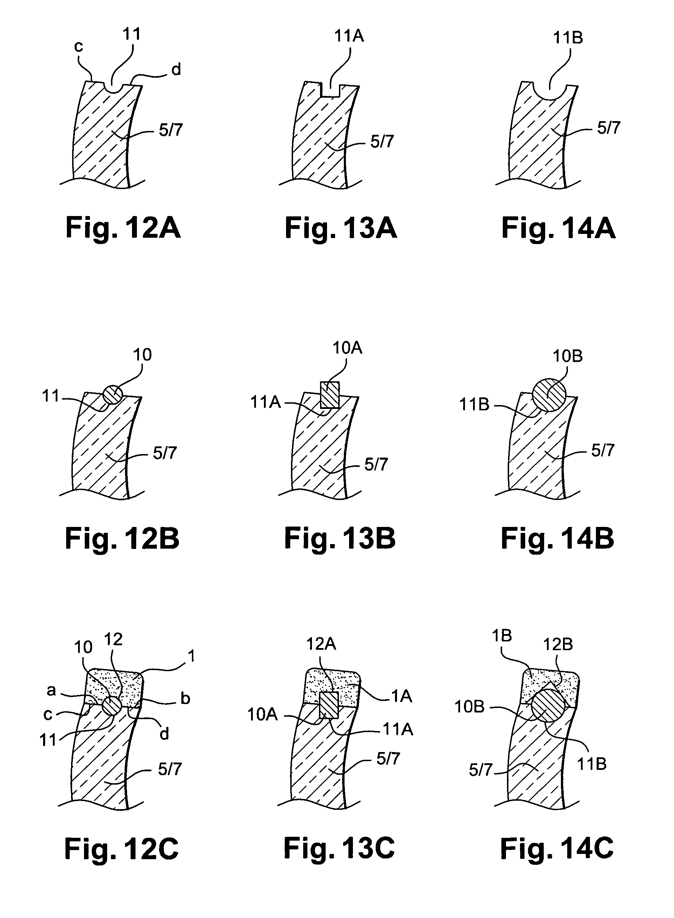

Selon l'exemple de réalisation représenté aux figures 13A, 13b, 13C, le jonc 10A est de section quadrangulaire et est intégré de manière définitive dans la gorge 11A du verre 4, 5 ou 6, 7, et de manière amovible dans la gorge 12A de l'ouverture 2, 3 de la monture 1, 1A, 1B, les deux gorges 11A, 12A reformant entre elles une section circulaire correspondant à celle du jonc 10A.

Selon une autre caractéristique de l'invention, la profondeur de la gorge 11, 11A, 11B du verre 4, 5 ou 6, 7 et la profondeur de la gorge 12, 12A, 12B de là monture 1, 1A, 1B sont chacune égale à la demi épaisseur du jonc 10, 10A, 10B.

Selon une variante, la profondeur de la gorge 11, 11A, 11B du verre 4, 5 ou 6, 7 est supérieure à la demi épaisseur du jonc 10, 10A, 10B, la profondeur de la gorge 12, 12A, 12B de la monture 1, 1A, 1B étant égale à la différence entre l'épaisseur totale du jonc 10, 10A, 10B et la profondeur de la gorge 11, 11A, 11B du verre 4, 5 ou 6, 7.

Selon une variante d'application représentée aux figures 14A, 14B, 14C, le jonc 10, 10A, 10B, de section circulaire ou quadrangulaire, est intégré de manière définitive dans une gorge 11, 11A, 11B de section correspondante du verre 4, 5 ou 6, 7, et de manière amovible dans la gorge 12B de l'ouverture 2, 3 de la monture 1, 1A, 1B, qui est de section différente, mais de profondeur telle à permettre l'appui de la monture 1, 1A, 1B sur le verre 4, 5 ou 6, 7 et le recouvrement total du jonc 10, 10A, 10B, comme précédemment.

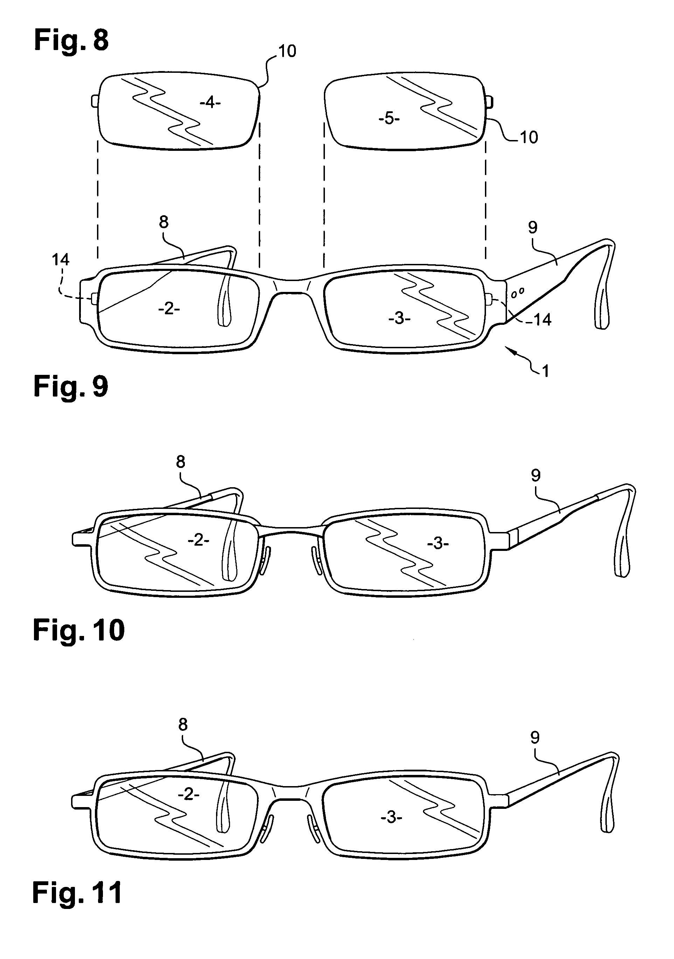

Comme déjà évoqué, ces lunettes comportent un dispositif de fermeture et de serrage 13 (voir figures 4 et 6) de l'élément de cerclage 10, 10A, 10B, connu en soi, s'engageant dans une ouverture 14 (voir figure 9) pratiquée dans la monture, assurant le positionnement exact en rotation du verre sur la monture, et conséquemment le centrage ophtalmique.

Plus précisément, la gorge interne 12B de l'ouverture 2, 3 de la monture 1A, 1B, 1C est de forme polygonale, préférentiellement triangulaire.

Préférentiellement, le jonc 10, 10A, 10B est réalisé à partir d'un fil d'acier.

L'acier inoxydable ou le titane seront préférés.

Préférentiellement, les montures 1, 1A, 1B sont réalisées en matière plastique. Mais bien entendu, elles pourraient également être réalisées en un métal ou tout autre matériau.

## Revendications

1. Lunettes du type constituées par une monture interchangeable (1A, 1B, 1C) dont la façade présente deux ouvertures (2, 3) encerclant deux verres optiques (4, 5) ou solaires (6, 7) et se prolongeant à ses extrémités extérieures par deux branches latérales (8, 9), chacun desdits verres étant rendu amovible par rapport à la monture, par l'intermédiaire d'un élément de cerclage métallique (10) disposé en relief et de manière définitive autour du verre (4, 5 ou 6, 7), et destiné à coopérer avec une gorge périphérique (11) correspondante pratiquée dans l'ouverture (2, 3) de la monture (1), **caractérisées en ce que** chacun des éléments de cerclage des verres (4, 5 ou 6, 7) est constitué par un jonc (10A, 10B), de section prédéterminée, s'intégrant d'une part, pour partie, dans une gorge (11, 11A, 11B) de section correspondante du verre (4, 5 ou 6, 7), réalisée dans une zone médiane périphérique de celui-ci, et d'autre part, pour l'autre partie, dans une gorge périphérique interne (12, 12A, 12B) de l'ouverture (2, 3) de la monture (1), dont les bords latéraux périphériques (a, b) viennent en appui des bords latéraux périphériques (c, d) du verre (4, 5 ou 6, 7), de part et d'autre du jonc (10, 10A, 10B), pour un recouvrement total de celui-ci.

2. Lunettes selon la revendication 1, **caractérisées en ce que** le jonc (10) est de section circulaire et est intégré de manière définitive dans la gorge (11) du verre (4, 5 ou 6, 7), et de manière amovible dans la gorge (12) de l'ouverture (2, 3) de la monture (1, 1A, 1B), les deux gorges (11, 12) reformant entre elles une section circulaire correspondant à celle du jonc (10).

3. Lunettes selon la revendication 1, **caractérisées en ce que** le jonc (10A) est de section quadrangulaire et est intégré de manière définitive dans la gorge (11A) du verre (4, 5 ou 6, 7), et de manière amovible dans la gorge (12A) de l'ouverture (2, 3) de la monture (1, 1A, 1B), les deux gorges (11A, 12A) reformant entre elles une section circulaire correspondant à celle du jonc (10A).

4. Lunettes selon l'une des revendications 2 ou 3, **caractérisées en ce que** la profondeur de la gorge (11, 11A, 11B) du verre (4, 5 ou 6, 7) et la profondeur de la gorge (12, 12A, 12B) de la monture (1, 1A, 1B) sont chacune égale à la demi épaisseur du jonc (10, 10A, 10B).

5. Lunettes selon l'une des revendications 2 ou 3, **caractérisées en ce que** la profondeur de la gorge (11, 11A, 11B) du verre (4, 5 ou 6, 7) est supérieure à la demi épaisseur du jonc (10, 10A, 10B), la profondeur de la gorge (12, 12A, 12B) de la monture (1, 1A, 1B) étant égale à la différence entre l'épaisseur totale du jonc (10, 10A, 10B) et la profondeur de la gorge (11, 11A, 11B) du verre (4, 5 ou 6, 7).

6. Lunettes selon la revendication 1, **caractérisées en ce que** le jonc (10, 10A, 10B), de section circulaire ou quadrangulaire, est intégré de manière définitive dans une gorge (11, 11A, 11B) de section correspondante du verre (4, 5 ou 6, 7), et de manière amovible dans la gorge (12B) de l'ouverture (2, 3) de la monture (1, 1A, 1B), qui est de section différente, mais de profondeur telle à permettre l'appui de la monture (1, 1A, 1B) sur le verre (4, 5 ou 6, 7) et le recouvrement total du jonc (10, 10A, 10B).

7. Lunettes selon la revendication 6, **caractérisées en ce que** la gorge interne (12B) de l'ouverture (2, 3) de la monture (1, 1A, 1B) est de forme polygonale.

8. Lunettes selon la revendication 7, **caractérisées en ce que** la gorge interne (12B) de l'ouverture (2, 3) de la monture (1, 1A, 1B) est de forme triangulaire.

9. Lunettes selon l'une des revendications 1 à 8, **caractérisées en ce que** le jonc (10, 10A, 10B) est réalisé à partir d'un fil d'acier.

10. Lunettes selon l'une des revendications 1 à 9, **caractérisées en ce que** la monture (1, 1A, 1B) est réalisée en matière plastique.
